# EUROPEAN PATENT SPECIFICATION

(11) **EP 2 683 995 B1**
(45) Date of publication and mention of the grant of the patent: **22.04.2015**
(21) Application number: 12710863.7
(22) Date of filing: 08.03.2012
(51) Int. Cl.: F25B 41/06

(54) **AN EXPANSION VALVE FOR A VAPOUR COMPRESSION SYSTEM WITH REVERSIBLE FLUID FLOW**
EXPANSIONSVENTIL FÜR EIN DAMPFKOMPRESSIONSSYSTEM MIT UMKEHRBAREM FLÜSSIGKEITSFLUSS
DÉTENDEUR POUR SYSTÈME À COMPRESSION DE VAPEUR AVEC ÉCOULEMENT RÉVERSIBLE DE FLUIDE

(30) Priority: 09.03.2011 DK 201100157
(43) Date of publication of application: 15.01.2014
(73) Proprietor: Danfoss A/S, 6430 Nordborg (DK)
(72) Inventor: FOSEL, Georg, 24939 Flensburg (DE); THYBO, Claus, DK-8400 Sønderborg (DK)
(74) Representative: Jennings, Nigel Robin
(86) International application number: PCT/DK2012/000019
(87) International publication number: WO 2012/119602

(56) References cited:
- JP-A- 2004 257 676
- JP-A- 2005 265 230
- US-A- 5 029 454
- US-A- 5 186 021

## Description

### FIELD OF THE INVENTION

The present invention relates to an expansion valve for a vapour compression system, such as a refrigeration system, an air condition system or a heat pump. The expansion valve of the invention is switchable between a first state and a second state, and is suitable for use in a vapour compression system in which the flow of fluid medium can be reversed, e.g. a vapour compression system which can be switched between an air condition mode and a heat pump mode. The present invention further relates to a vapour compression system comprising such an expansion valve.

### BACKGROUND OF THE INVENTION

Vapour compression systems, such as refrigeration systems, air condition systems or heat pumps, normally comprise a compressor, a condenser, an expansion device, e.g. in the form of an expansion valve, and an evaporator arranged along a refrigerant path. Refrigerant circulates the refrigerant path and is alternatingly compressed and expanded. Heat exchange takes place in the condenser and the evaporator, and it is thereby possible to provide cooling or heating to a closed volume, e.g. a room or a refrigerated compartment or box.

In some cases it is desirable that the vapour compression system is capable of selectively operating as an air condition system or as a heat pump. Thereby it is possible to provide cooling to a closed volume during warm or hot seasons, and to provide heating to the closed volume during cold seasons, using the same vapour compression system. Such vapour compression systems comprise two heat exchangers which are both capable of operating as an evaporator and as a condenser, depending on which mode is selected for the vapour compression system. One heat exchanger is arranged to exchange heat with air present in the closed volume while the other heat exchanger is arranged to exchange heat with outside air.

Thus, when an indoor temperature which is lower than the outdoor temperature is desired, the heat exchanger arranged to exchange heat with air in the closed volume operates as an evaporator, and the heat exchanger arranged to exchange heat with the outside air operates as a condenser. Thereby the vapour compression system operates as an air condition system, and cooling is provided for the closed volume. Similarly, when an indoor temperature which is higher than the outdoor temperature is desired, the fluid flow in the vapour compression system is reversed, the heat exchanger arranged to exchange heat with air in the closed volume operates as a condenser, and the heat exchanger arranged to exchange heat with the outside air operates as an evaporator. Thereby the vapour compression system operates as a heat pump, and heating is provided for the closed volume.

In order to allow the vapour compression system to be operated selectively as an air condition system or as a heat pump, it is necessary to design the vapour compression system in such a manner that expanded refrigerant can be selectively supplied to both of the heat exchangers when they operate as evaporators, and in such a manner that refrigerant is allowed to flow substantially unrestricted from both of the heat exchangers when they operate as condensers.

In some prior art vapour compression systems this has been obtained by providing two expansion devices, one for each heat exchanger, and ensuring that a substantially unrestricted refrigerant flow is allowed to pass the expansion devices when the corresponding heat exchanger is operating as a condenser, e.g. by means of bypass flow paths.

In alternative prior art compression systems, a reversible thermostatic expansion valve (TXV) has been provided between the two heat exchangers, the reversible thermostatic expansion valve being capable of supplying expanded refrigerant to each of the heat exchangers. However, a thermostatic expansion valve should preferably be controlled on the basis of the superheat of refrigerant leaving the evaporator. However, since both of the heat exchangers may operate as evaporators, depending on the selected mode of the vapour compression system, it is not possible to arrange a sensor or a bulb for the thermostatic expansion valve in a position which always provides the superheat of refrigerant leaving the evaporator. Accordingly, in these prior art systems, the sensor or bulb is arranged at a non-optimal position which provides a reasonable measure for the superheat, regardless of the mode of the vapour compression system. Thus, the thermostatic expansion valve is controlled in a non-optimal manner.

US 5,186,021 discloses a refrigerant expansion device including a body having a flow passage extending therethrough which may pass refrigerant in either direction. A piston is slideably mounted in the flow passage for movement between a first position and a second position in response to the direction of refrigerant flow through the flow passage. The piston also includes at least one flow channel substantially parallel to a metering port for passing a substantially unrestricted flow of refrigerant when the piston is moved away from the first position in the direction of the second position responsive to the flow of refrigerant in the opposite direction. Means are provided for moving the piston, against the flow of refrigerant in the one direction away from the first position. As a result, the expansion device will allow substantially unrestricted flow therethrough in the direction in which it normally meters refrigerant. Under the influence of the flowing refrigerant, the piston will move to a position closing fluid flow channels against an end wall of the expanded chamber, whereby the refrigerant is forced to pass through the more restricted metering port to throttle the refrigerant from the high pressure side of the system to the low pressure side. Accordingly, flow of refrigerant is constant, unrestricted and with a fixed opening degree in the direction in which it normally meters refrigerant.

US 5,029,454 discloses a flow metering device for use as an expansion valve in a heat pump system includes a body having a flow passage extending therethrough, according to the preamble of claim 1. A piston having a flow metering port extending therethrough is moveably positioned within the flow passage. An elongated member extends through the metering port of the piston and is axially and radially fixed within the body. The elongated member has a central portion which cooperates with the metering port to prevent flow through the port when axially aligned with it. The elongated member has flow metering configurations formed thereon on both sides of the central portion. The piston is spring biased into alignment with the central portion. Refrigerant flow in either direction through the device results in movement of the piston against a spring force into a flow metering relationship with one of the metering configurations. The size of the flow metering passages defined by the flow metering port and the metering configurations are a function of the position of the piston, which is, in turn, a function of the pressure differential across the device. The valve is fully closed, when the central portion of the elongated member cooperates with the metering port, thereby preventing flow of refrigerant through the port when axially aligned with it, that is, when the refrigerant pressure on both sides of the piston is the same.

JP2005265230 discloses a bidirectional expansion device cancelling a part of refrigerant pressure by a pressure cancelling structure. That is, elastic force required by springs can be reduced by amount of pressure received on a pressure receiving face for closing valve. As a result, compact springs can be adopted for use, and the whole bidirectional expansion device can be constituted in a compact manner. Since refrigerant flowing in from a step part side can escape into a flow passage separate from a restriction flow passage by a relief mechanism when difference in pressure between the front and rear parts of the bidirectional expansion device exceeds a value set in advance, it is possible to prevent abnormal rise of refrigerant pressure inside the bidirectional expansion device and prevent breakage of internal equipment. Accordingly, an increase in differential pressure across the expansion valve results in an increase, not a decrease, in the opening degree of the expansion valve.

JP 2004257676 discloses a refrigerant pipe between an outdoor heat exchanger and an indoor heat exchanger is formed into a body, a sleeve having a large diameter orifice in the partition part thereof is fixedly disposed in the body, and a plug moving close to and apart from the partition part according to the flow direction of the refrigerant is disposed in the sleeve. The plug comprises a small diameter orifice concentric to the large diameter orifice, and the outer periphery thereof is formed in a polygon to form a refrigerant passage. When the refrigerant flows from a side where the plug is present, the plug comes into contact with the partition part by the refrigerant, and the refrigerant is restricted by the small diameter orifice. When the refrigerant flows in a reverse direction, the plug is separated from the partition part by the refrigerant, and the refrigerant is restricted by the large diameter orifice and flows through the refrigerant passage in the outer periphery of the plug. As a result, the throttling characteristics can be varied. Accordingly, when the refrigerant flows from a side where the plug comes into contact with the partition part, the refrigerant flow is fixed by the small diameter orifice, and when the refrigerant flows from a side where the plug is separated from the partition part, the refrigerant flow is fixed by the large diameter orifice. An increase or a decrease in differential pressure across the valve does not result in a corresponding increase or decrease in the opening degree of the valve.

### description of the invention

It is an object of embodiments of the invention to provide an expansion valve for a reversible flow vapour compression system, the expansion valve being easy to control in an accurate manner.

It is a further object of embodiments of the invention to provide a vapour compression system allowing a reversed fluid flow using fewer components than prior art vapour compression systems.

It is an even further object of embodiments of the invention to provide a vapour compression system allowing a reversed fluid flow, while maintaining a simple design of the vapour compression system.

According to a first aspect the invention provides an expansion valve for a vapour compression system, the expansion valve comprising a first valve member, a second valve member and a third valve member, said valve members being arranged in such a manner that relative movements at least between the first valve member and the second valve member, and between the first valve member and the third valve member are possible, the expansion valve being switchable between a first state in which an opening degree of the expansion valve is determined by the relative position of the first valve member and the second valve member, and a second state in which an opening degree of the expansion valve is determined by the relative position of the first valve member and the third valve member, wherein the expansion valve is automatically moved between the first state and the second state in response to a change in direction of fluid flow through the expansion valve, wherein the second valve member defines a first fluid passage, and the third valve member defines a second fluid passage, wherein end portions of the first valve member are arranged adjacent to the fluid passages and are intended for being moved into the first fluid passage and the second fluid passage so that an opening degree of the expansion valve is defined by the fluid passages and the end portions in combination, wherein two compressible springs are arranged between the first valve member and the second valve member, and between the first valve member and the third valve member, respectively, and wherein the two compressible springs bias the first valve member in a direction away from the second valve member and in a direction away from the third valve member, and wherein the first valve member, in a rest position, where there is no fluid flow through the expansion valve, is arranged at substantially equal distance to the second valve member and the third valve member 21, and wherein an increase in differential pressure across the expansion valve results in the first valve member, in the first state, being moved towards the second valve member or, in the second state, being moved towards the third valve member, the increase in differential pressure resulting in a larger part of the fluid passages being blocked by the end portions, and in the opening degree of the expansion valve thereby being decreased.

In the present context the term 'vapour compression system' should be interpreted to mean any system in which a flow of fluid medium, such as refrigerant, circulates and is alternatingly compressed and expanded, thereby providing either refrigeration or heating of a volume. Thus, the vapour compression system may be a refrigeration system, an air condition system, a heat pump, etc. The vapour compression system, thus, comprises a compressor, an expansion device, e.g. in the form of an expansion valve, and two heat exchangers, one operating as a condenser and one operating as an evaporator, arranged along a refrigerant path.

When arranged in a vapour compression system, the expansion valve is arranged in the refrigerant path immediately upstream relative to the evaporator. Thereby the expansion valve expands the refrigerant and controls the supply of expanded refrigerant to the evaporator.

It should be noted that, even though the expansion valve of the invention is very suitable for use as expansion device in a vapour compression system, it is not ruled out that the expansion valve is used in other systems. For instance, the expansion valve of the invention may be used in an absorption refrigeration system, where the refrigerant is not compressed mechanically. The evaporated, gaseous refrigerant is dissolved in a liquid and pumped into a regenerator, where the refrigerant is thermally separated from the liquid due to the different boiling points between refrigerant and liquid. The gaseous refrigerant is liquefied in a condenser and expanded to a lower pressure by means of throttling devices such as the expansion valve of the invention.

The expansion valve comprises a first valve member, a second valve member and a third valve member. The valve members are arranged in such a manner that relative movements between the first valve member and the second valve member are possible. Furthermore, relative movements between the first valve member and the third valve member are possible. The second valve member and the third valve member may be arranged substantially fixed relative to each other. Alternatively, relative movements between the second valve member and the third valve member may also be possible. The relative movability of the valve members may be obtained by allowing the first valve member to move, while the second valve member and/or the third valve member is/are fixed relative to the remaining parts of the expansion valve. As an alternative, the second valve member and the third valve member may be allowed to move, while the first valve member is arranged substantially fixed relative to the remaining parts of the expansion valve. As another alternative, all three valve members may be allowed to move relative to the remaining parts of the expansion valve, and relative to each other.

The expansion valve is switchable between a first state and a second state. In the first state an opening degree of the expansion valve is determined by the relative position of the first valve member and the second valve member. In the second state an opening degree of the expansion valve is determined by the relative position of the first valve member and the third valve member. Thus, when the expansion valve is in the first state the opening degree of the expansion valve, and thereby mass flow of refrigerant passing through the expansion valve, may be altered when the relative position of the first valve member and the second valve member is changed. Similarly, when the expansion valve is in the second state the opening degree of the expansion valve, and thereby the mass flow of refrigerant passing through the expansion valve, may be altered when the relative position of the first valve member and the third valve member is changed.

The expansion valve is automatically moved between the first state and the second state in response to a change in direction of fluid flow through the expansion valve. Thus, when the fluid flow through the expansion valve is in a first direction, the expansion valve will be in the first state, i.e. the opening degree of the expansion valve is determined by the relative position of the first valve member and the second valve member. If the fluid flow through the expansion valve is reversed, the expansion valve is automatically moved to the second state, and the opening degree of the expansion valve is thereby determined by the relative position of the first valve member and the third valve member.

Accordingly, the expansion valve of the invention is very suitable for being used in a vapour compression system in which the fluid flow is reversible, e.g. a vapour compression system which is selectively operable in an air condition mode or a heat pump mode. As described above, such a vapour compression system normally comprises two heat exchangers, the two heat exchangers each being capable of operating as a condenser or as an evaporator, depending on the operating mode of the vapour compression system. The expansion valve of the invention can be arranged in the vapour compression system in such a manner, that when the fluid flow through the expansion valve is in a first direction, the expansion valve is in the first state, and expanded refrigerant is delivered by the expansion valve to a first heat exchanger. Similarly, when the fluid flow through the expansion valve is in a second, reverse direction, the expansion valve is in the second state, and expanded refrigerant is delivered by the expansion valve to the second heat exchanger. Thus, the heat exchangers 'switch role' when the fluid flow through the expansion valve is reversed. Furthermore, this switch is performed automatically in response to the change in direction of the fluid flow through the expansion valve. Thereby it is ensured that the expansion valve is always operated in accordance with the selected mode of the vapour compression system, without requiring complicated control of the expansion valve.

The expansion valve may have a first, substantially fixed opening degree when the expansion valve is in the first state, and a second, substantially fixed opening degree when the expansion valve is in the second state, the second opening degree being distinct from the first opening degree. According to this embodiment, the opening degree of the expansion valve is not controlled while the expansion valve is in the first state or the second state. However, since the second opening degree is distinct from the first opening degree, the opening degree of the expansion valve is changed abruptly when the direction of fluid flow through the expansion valve is changed, and the expansion valve is thereby moved from the first state to the second state or from the second state to the first state. Thus, the expansion valve is operated at one, substantially fixed opening degree when the fluid flow through the expansion valve is in a first direction, and at another, substantially fixed opening degree when the fluid flow through the expansion valve is in another, reversed direction.

One or more valve parts may be automatically moved in response to changes in a differential pressure across the expansion valve, the opening degree of the expansion valve thereby being automatically altered in response to changes in the differential pressure across the expansion valve. According to this embodiment, the opening degree of the expansion valve is controlled while the expansion valve is in the first or second state, respectively. Furthermore, the opening degree of the expansion valve is altered automatically in response to changes in the differential pressure across the expansion valve. Thus, when the differential pressure across the expansion valve is changed, one or more valve parts, preferably one or more of the valve members, is/are automatically moved. Thereby the relative position between the first valve member and the second valve member, and/or the relative position between the first valve member and the third valve member is/are changed. Since the opening degree of the expansion valve is determined by the relative position of the first valve member and the second valve member, or the relative position of the first valve member and the third valve member, depending on whether the expansion valve is in the first or the second state, the opening degree of the expansion valve is also altered automatically when the differential pressure across the expansion valve changes.

Thus, the opening degree of the expansion valve is automatically adjusted to correspond to a differential pressure which is presently occurring across the expansion valve. This allows the expansion valve to be operated with one opening degree at low differential pressures and with another opening degree at high differential pressures. This is, e.g., desirable when the expansion valve is arranged in a vapour compression system comprising a compressor being capable of operating at two different capacity levels. The two different capacity levels results in two distinct differential pressure levels across the expansion valve. The opening degree of the expansion valve according to this embodiment of the invention is automatically altered when the compressor capacity is changed, thereby allowing the vapour compression system to be operated in an optimal manner at both compressor capacity levels. Furthermore, since the opening degree of the expansion valve is altered automatically in response to changes in the differential pressure, the adjustment of the opening degree is obtained without the requirement of complicated control of the expansion valve, e.g. of the kind which is used for controlling thermostatic expansion valves. Thereby close to optimal operation of the expansion valve can be obtained at low costs.

The first valve member and the second valve member may in combination form a first expansion valve, and the first valve member and the third valve member may in combination form a second expansion valve. According to this embodiment the expansion valve defines two separate expansion valves, one formed by the first valve member and the second valve member, and one formed by the first valve member and the third valve member. Thus, according to this embodiment, the expansion valve is a double valve. When the expansion valve is in the first state, the opening degree of the expansion valve is determined by the expansion valve formed by the first valve member and the second valve member, and when the expansion valve is in the second state, the opening degree of the expansion valve is determined by the expansion valve formed by the first valve member and the third valve member. For each of the expansion valves, a valve seat may be formed on one valve member and a valve element may be formed on the other valve member. When the valve members are moved relative to each other, the valve seat and the valve element are also moved relative to each other, thereby changing the opening degree of the expansion valve.

The expansion valve comprises biasing means arranged to mechanically bias the first valve member and the second valve member in a direction away from each other, and/or to mechanically bias the first valve member and the third valve member in a direction away from each other. The biasing means may be in the form of mechanical biasing means, such as one or more compressible springs arranged to push the relevant valve members away from each other, or a member made from a resilient material, or any other suitable kind of mechanical biasing means. As an alternative, the biasing means may be magnetic biasing means arranged to push the relevant valve members away from each other. The relevant valve members are moved against the biasing force of the biasing means when they are moved towards each other. In the case that the valve members are automatically moved in response to changes in the differential pressure across the expansion valve as described above, the biasing means may be selected and/or adjusted in such a manner that desired relative movements of the valve members are obtained in response to changes in the differential pressure across the expansion valve during normal operation of the expansion valve, thereby obtaining that the opening degree of the expansion valve is altered in a desired manner.

The second valve member and the third valve member each define a fluid passage, and the first valve member may comprise a first protruding element being arranged in the fluid passage of the second valve member when the expansion valve is in the first state, and a second protruding element being arranged in the fluid passage of the third valve member when the expansion valve is in the second state. According to this embodiment, the fluid passages of the second and third valve members may each form a valve seat, and the protruding elements of the first valve member may each form a valve element, and the valve seats and the valve elements may pair-wise form expansion valves.

The first protruding element and/or the second protruding element may have a geometry which provides an opening degree of the expansion valve which is a known function of the relative position of the first valve member and the second and/or third valve member. According to this embodiment, a given relative position of the first valve member and the second and/or third valve member results in a well defined and known opening degree of the expansion valve. Thereby the control of the expansion valve can easily be performed in an accurate manner.

Alternatively or additionally, the first protruding element and/or the second protruding element may have a substantially conical shape. According to this embodiment, the opening degree of the expansion valve is gradually decreased as a protruding element is moved further into a corresponding fluid passage. Similarly, the opening degree of the expansion valve is increased as a protruding element is moved further outwards relative to a corresponding fluid passage.

Alternatively or additionally, the first protruding element and/or the second protruding element may be provided with one or more grooves, at least one groove defining a dimension which varies along a longitudinal direction of the protruding element. Since at least one groove defines a dimension which varies along a longitudinal direction of the protruding element, the part of the corresponding fluid passage being blocked by the protruding element is determined by the position of the protruding element relative to the fluid passage along the longitudinal direction. This is an advantageous embodiment because it is relatively easy to provide such grooves with high accuracy, and thereby the correspondence between the relative position of the valve members and the opening degree of the expansion valve is determined with high accuracy. The varying dimension may, e.g., be the depth or the width of the groove.

The second protruding element may be arranged outside the fluid passage of the third valve member when the expansion valve is in the first state and/or the first protruding element may be arranged outside the fluid passage of the second valve member when the expansion valve is in the second state. When a protruding element is arranged outside a corresponding fluid passage, fluid is allowed to flow substantially unrestricted through the fluid passage. Thus, according to this embodiment, when the expansion valve is in the first state, fluid is allowed to flow substantially unrestricted through the fluid passage of the third valve member, while the fluid passage of the second valve member and the first protruding element in combination control the fluid flow through the expansion valve and ensure that the refrigerant is expanded. Alternatively or additionally, when the expansion valve is in the second state, fluid is allowed to flow substantially unrestricted through the fluid passage of the second valve member, while the fluid passage of the third valve member and the second protruding element in combination control the fluid flow through the expansion valve and ensure that the refrigerant is expanded.

As an alternative, the first valve member may be provided with a first fluid passage and a second fluid passage, and the second valve member and the third valve member may each be provided with a protruding element, each protruding element being adapted to be arranged in a fluid passage of the first valve member, similarly to the situation described above. As another alternative, the first valve member may be provided with a fluid passage and a protruding element, while the second/third valve member is provided with a protruding element and the third/second valve member is provided with a fluid passage. In this case the protruding element of the second/third valve member is adapted to be arranged in the fluid opening of the first valve member, and the protruding element of the first valve member is adapted to be arranged in the fluid passage of the third/second valve member, similarly to the situation described above.

According to a second aspect the invention provides a vapour compression system comprising a compressor, a first heat exchanger, a second heat exchanger and an expansion valve according to the first aspect of the invention, the compressor the first heat exchanger, the expansion valve and the second heat exchanger being arranged along a refrigerant path.

It should be noted that a person skilled in the art would readily recognise that any feature described in combination with the first aspect of the invention could also be combined with the second aspect of the invention and vice versa.

The first heat exchanger may operate as an evaporator and the second heat exchanger as a condenser when the expansion valve is in the first state, and the first heat exchanger may operate as a condenser and the second heat exchanger as an evaporator when the expansion valve is in the second state. According to this embodiment the two heat exchangers 'switch role' when the expansion valve is switched between the first state and the second state. Accordingly, the vapour compression system is of the kind which is capable of selective operating in an air condition mode or a heat pump mode, and the expansion valve is adapted to deliver expanded refrigerant to both of the heat exchangers, depending on which mode is selected. Thereby, the vapour compression system is capable of being selectively operated in air condition mode or in heat pump mode, without the requirement of two separate expansion valves, and while maintaining a simple structure and design of the vapour compression system.

Thus, the expansion valve may be arranged to supply expanded refrigerant to the first heat exchanger when the expansion valve is in the first state, and to supply expanded refrigerant to the second heat exchanger when the expansion valve is in the second state.

According to one embodiment, at least the first heat exchanger, the second heat exchanger and the expansion valve may be arranged in a compact unit. Arranging the heat exchangers close to each other in the compact unit allows the expansion valve to be arranged in such a manner that it is capable of supplying expanded refrigerant directly to both of the heat exchangers.

### BRIEF DESCRIPTION OF THE DRAWINGS

The invention will now be described in further detail with reference to the accompanying drawings in which
Figs. 1a-3b are diagrammatic views of various prior art vapour compression systems,
Figs. 4a and 4b are diagrammatic views of a vapour compression system according to an embodiment of the invention,
Figs. 5-11 illustrate an expansion valve according to a first embodiment of the invention, and
Figs. 12-18 illustrate an expansion valve according to a second embodiment of the invention.

### DETAILED DESCRIPTION OF THE DRAWINGS

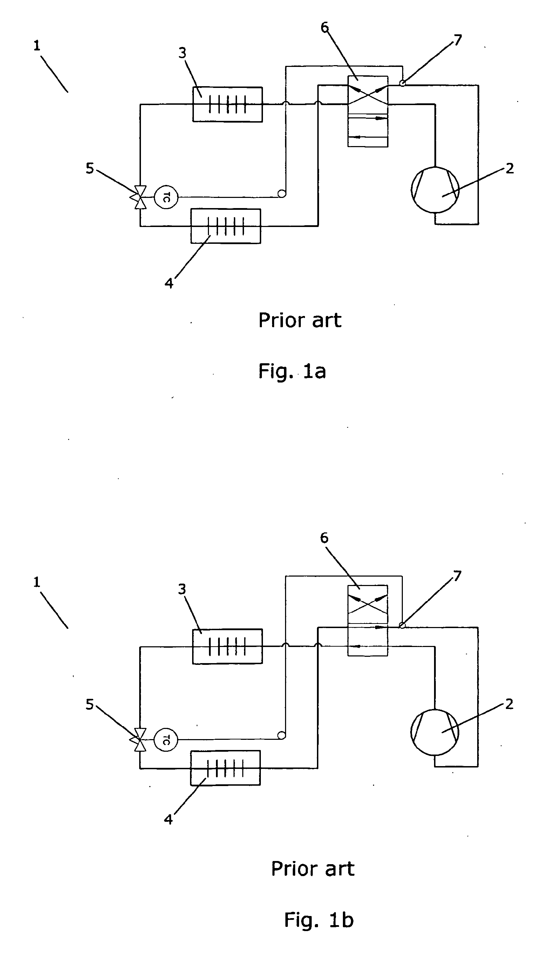

Figs. 1 a and 1 b are diagrammatic views of a first prior art vapour compression system 1. The vapour compression system 1 comprises a compressor 2, a first heat exchanger 3 and a second heat exchanger 4. A reversible thermostatic expansion valve 5 is arranged between the heat exchangers 3, 4 in such a manner that the thermostatic expansion valve 5 is capable of supplying expanded refrigerant to both of the heat exchangers 3, 4, depending on the direction of fluid flow in the vapour compression system 1. A four way valve 6 is operable to control the direction of the fluid flow in the vapour compression system 1.

Thus, when the four way valve 6 is in a first position, illustrated in Fig. 1 a, refrigerant is compressed by the compressor 2. The compressed refrigerant is supplied to the second heat exchanger 4, which in this case operates as a condenser. Accordingly, the refrigerant is at least partly condensed in the second heat exchanger 4, the refrigerant leaving the second heat exchanger 4 being at least partly in a liquid state. The refrigerant is then supplied to the reversible thermostatic expansion valve 5, where it is expanded before being supplied to the first heat exchanger 3, which in this case operates as an evaporator. Accordingly, the refrigerant is at least partly evaporated in the first heat exchanger 3, the refrigerant leaving the first heat exchanger 3 being in a substantially gaseous state. Finally, the refrigerant is supplied to the compressor 2, and the cycle is repeated.

Similarly, when the four way valve 6 is in a second position, illustrated in Fig. 1b, the fluid flow in the vapour compression system 1 is reversed. Accordingly, refrigerant delivered by the compressor 2 is supplied to the first heat exchanger 3, which in this case operates as a condenser, and refrigerant delivered by the reversible thermostatic expansion valve 5 is supplied to the second heat exchanger 4, which in this case operates as an evaporator.

When a thermostatic expansion valve is used in a vapour compression system 1 for expanding refrigerant before supplying the refrigerant to an evaporator, it is desirable to operate the thermostatic expansion valve in such a manner that an minimal superheat of the refrigerant leaving the evaporator is obtained. The superheat is defined as the difference between the temperature of the refrigerant leaving the evaporator and the dew point of the refrigerant leaving the evaporator. Thus, a high superheat indicates that all of the refrigerant was evaporated in the evaporator, and that energy has been used for heating the evaporated, gaseous refrigerant. Thus, the potential refrigerating capacity of the evaporator is not utilised in an optimal manner in this case. On the other hand, a superheat which is zero indicates that liquid refrigerant may be passing through the evaporator and entering the suction line. Liquid refrigerant in the suction line introduces the risk that liquid refrigerant reaches the compressor 2. This may cause damage to the compressor 2 and is therefore undesirable. Accordingly, it is normally attempted to operate the thermostatic expansion valve in such a manner that a low, but positive, superheat is obtained. To this end, the superheat of refrigerant leaving the evaporator is often monitored and used as a control parameter for the thermostatic expansion valve. The superheat is often measured by means of one or more sensors arranged immediately downstream relative to the evaporator.

As described above, in the vapour compression system 1 of Figs. 1a and 1b, the first heat exchanger 3 as well as the second heat exchanger 4 may operate as an evaporator, depending on the position of the four way valve 6. Therefore, the reversible thermostatic expansion valve 5 is operated on the basis of superheat measurements performed by one or more sensors 7 arranged in the refrigerant path between the four way valve 6 and the compressor 2. Accordingly, the measurements performed by the sensor(s) 7 represent the superheat of refrigerant flowing in the suction line, regardless of whether the first heat exchanger 3 or the second heat exchanger 4 operates as an evaporator. However, this has the consequence that the sensor(s) is/are arranged relatively far from the outlet of the evaporator, and the obtained superheat value therefore does not reflect the superheat of the refrigerant leaving the evaporator in an accurate manner. Therefore the control of the reversible thermostatic expansion valve 5 is not very accurate, and the vapour compression system 1 is not controlled in an optimal manner, since the superheat measured by the sensor(s) 7 is influenced by heat flux from the four way valve 6.

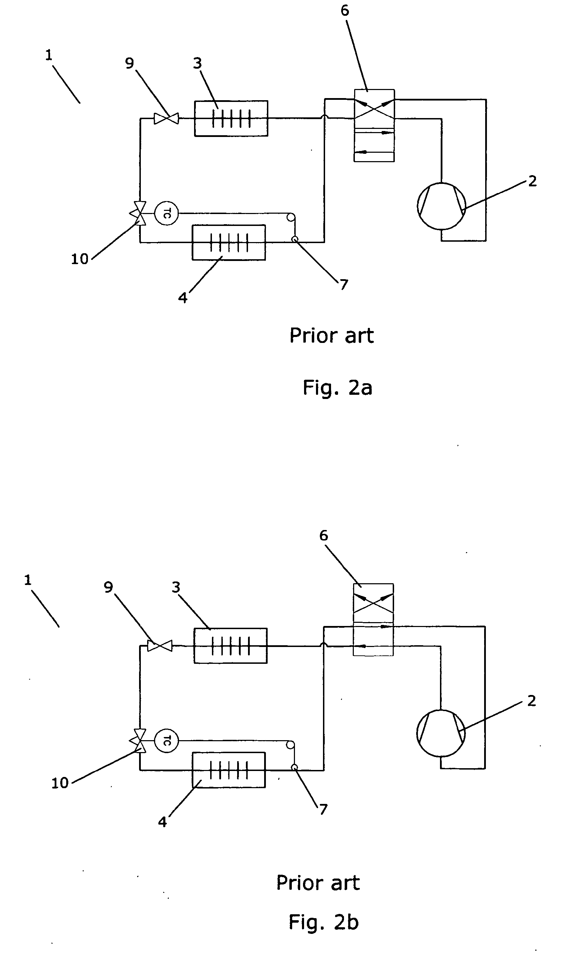

Figs. 2a and 2b are diagrammatic views of a second prior art vapour compression system 1. The vapour compression system 1 of Figs. 2a and 2b is very similar to the vapour compression system 1 of Figs. 1a and 1b, and it will therefore not be described in detail here. Contrary to the vapour compression system of Figs. 1a and 1b, the vapour compression system 1 of Figs. 2a and 2b does not comprise a reversible thermostatic expansion valve 5. Instead the vapour compression system 1 of Figs. 2a and 2b comprises a fixed orifice expansion valve 9 arranged to supply expanded refrigerant to the first heat exchanger 3 and a thermostatic expansion valve 10 arranged to supply expanded refrigerant to the second heat exchanger 4. The opening degree of the thermostatic expansion valve 10 is controlled on the basis of measurements performed by sensor(s) 7 in order to obtain an optimal superheat value when the second heat exchanger 4 operates as an evaporator. The fixed orifice expansion valve 9 is not controlled.

Since the vapour compression system 1 of Figs. 2a and 2b comprises two expansion valves 9, 10, one for each heat exchanger 3, 4, the component count of the vapour compression system 1 is increased as compared to the vapour compression system 1 of Figs. 1a and 1b. This increases the manufacturing costs and the complexity of the vapour compression system 1. Since a fixed orifice expansion valve is normally cheaper than a thermostatic expansion valve, using the fixed orifice valve 9 for supplying expanded refrigerant to the first heat exchanger 3 reduces the costs a bit. However, this has the consequence that the supply of refrigerant to the second heat exchanger 3 is not controllable when the first heat exchanger 3 operates as an evaporator.

The vapour compression system 1 of Figs. 2a and 2b may advantageously be operated in air condition mode when the second heat exchanger 4 operates as an evaporator, i.e. the situation illustrated in Fig. 2b, and in heat pump mode when the first heat exchanger 3 operates as an evaporator, i.e. the situation illustrated in Fig. 2a. This is because it is normally more important to fully utilise the potential refrigeration capacity of the evaporator when the vapour compression system 1 is operated in air condition mode than when the vapour compression system 1 is operated in heat pump mode.

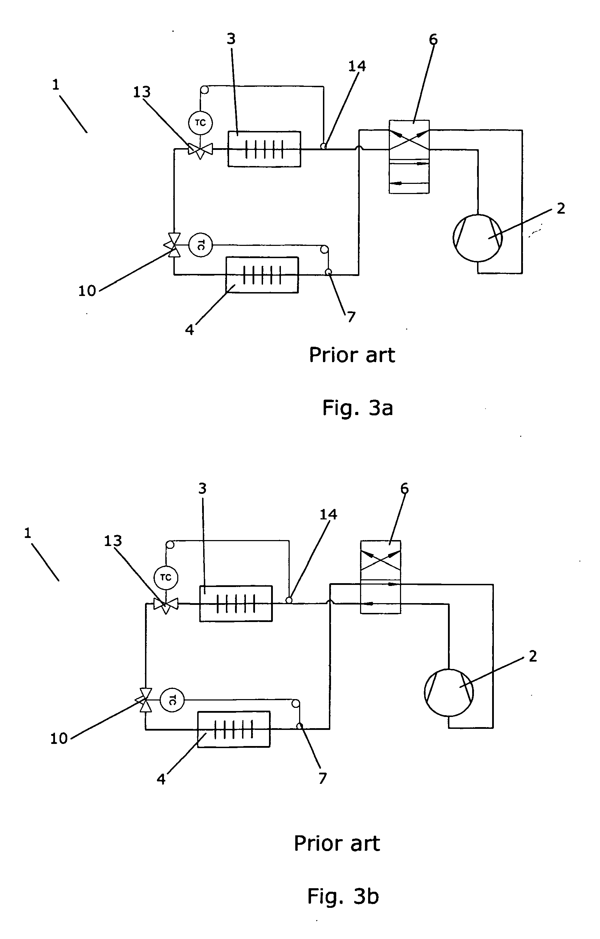

Figs. 3a and 3b are diagrammatic views of a third prior art vapour compression system 1. The vapour compression system 1 of Figs. 3a and 3b is very similar to the vapour compression system 1 of Figs. 2a and 2b, and will therefore not be described in detail here. However, in the vapour compression system 1 of Figs. 3a and 3b an additional thermostatic expansion valve 13 is arranged to supply expanded refrigerant to the first heat exchanger 3 when it operates as an evaporator. The thermostatic expansion valve 13 is controlled on the basis of a measured superheat which is obtained by means of one or more sensors 14.

Thus, in the vapour compression system 1 of Figs. 3a and 3b it is possible to control the supply of refrigerant to both of the heat exchangers in order to obtain a minimal superheat, regardless of the direction of fluid flow in the vapour compression system 1. However, the manufacturing costs of the vapour compression system 1 of Figs. 3a and 3b are higher than the manufacturing costs of the vapour compression system 1 of Figs. 2a and 2b.

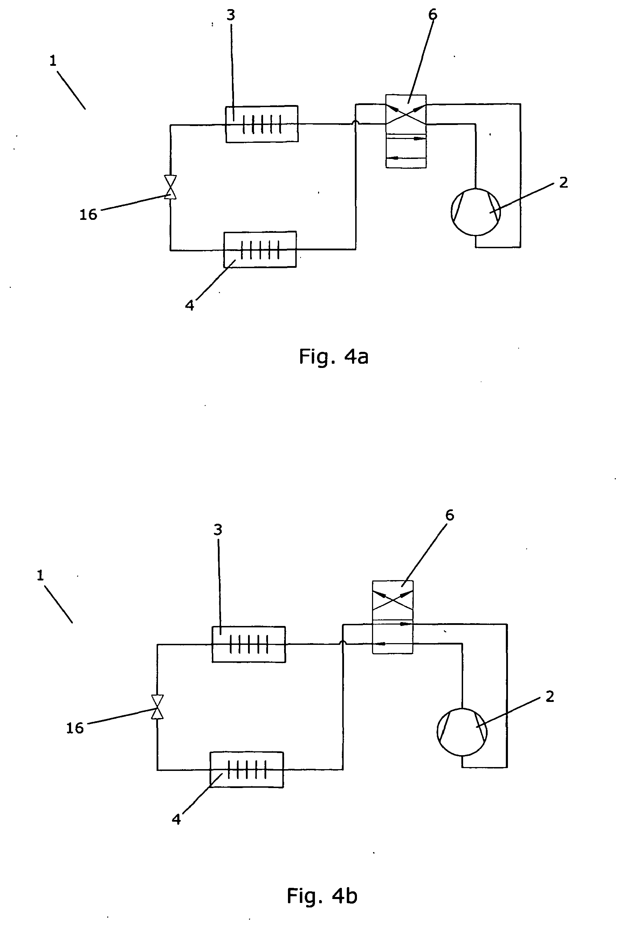

Figs. 4a and 4b are diagrammatic views of a vapour compression system 1 according to an embodiment of the invention. The vapour compression system 1 comprises a compressor 2, a first heat exchanger 3 and a second heat exchanger 4. A four way valve 6 is arranged to control the direction of fluid flow of the vapour compression system 1 in the manner described above with reference to Figs. 1 a and 1 b.

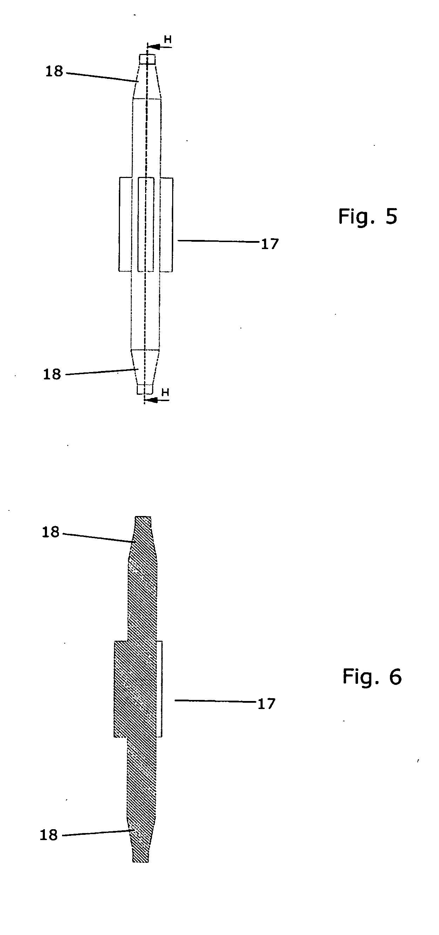

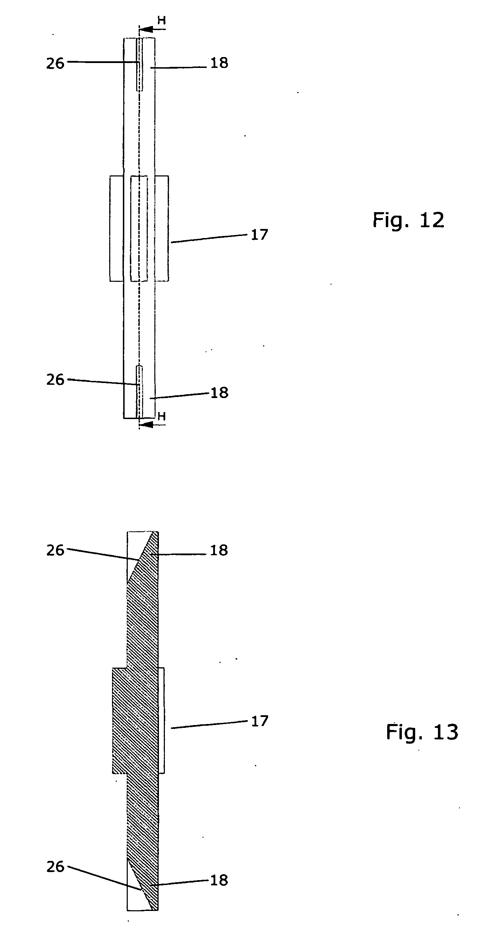

An expansion valve 16 is arranged in the refrigerant path between the first heat exchanger 3 and the second heat exchanger 4. Thus, the expansion valve 16 is adapted to supply expanded refrigerant to the first heat exchanger 3 as well as to the second heat exchanger 4, depending the direction of fluid flow in the vapour compression system 1. The expansion valve 16 is of a kind according to an embodiment of the invention, and it could, e.g., be the expansion valve 16 illustrated in Figs. 5-11 or the expansion valve 16 illustrated in Figs. 12-18. Accordingly, the expansion valve 16 is switchable between a first state in which the opening degree of the expansion valve 16 is determined by a relative position between a first valve member and a second valve member, and a second state in which the opening degree of the expansion valve 16 is determined by a relative position between the first valve member and a third valve member. The expansion valve 16 is automatically moved between the first state and the second state in response to a change in direction of fluid flow through the expansion valve 16.

Thus, if the direction of fluid flow in the vapour compression system 1 is such that the first heat exchanger 3 operates as an evaporator, i.e. the situation illustrated in Fig. 4a, then the expansion valve 16 is automatically in a state where refrigerant is expanded and supplied to the first heat exchanger 3. Similarly, if the direction of fluid flow in the vapour compression system 1 is such that the second heat exchanger 4 operates as an evaporator, i.e. the situation illustrated in Fig. 4b, then the expansion valve 16 is automatically in a state where refrigerant is expanded and supplied to the second heat exchanger 4. Accordingly, expanded refrigerant can be supplied to both of the heat exchangers 3, 4 using only one expansion valve 16, and it is always ensured that the expansion valve 16 is in the correct state.

Furthermore, the expansion valve 16 may advantageously be of a kind where the opening degree is automatically altered in response to changes in a differential pressure across the expansion valve 16. In this case the opening degree of the expansion valve 16 is controlled in order to obtain an optimal utilisation of the potential refrigeration capacity of the heat exchanger 3, 4 which operates as an evaporator, without the requirement of obtaining a measure for the superheat of the refrigerant leaving the evaporator. Thus, the disadvantages described above with reference to Fig. 1, relating to the position of the sensor(s) 7 are avoided.

It is clear from Figs. 4a and 4b that the expansion valve 16 of the invention provides a vapour compression system 1 which is much simpler and with fewer components than the prior art vapour compression systems 1 shown in Figs. 1a-3b.

Fig. 5 is a side view of a first valve member 17 for an expansion valve according to a first embodiment of the invention. The end portions 18 of the first valve member 17 define a substantially conical shape. However, the outermost tips of the end portions 18 are substantially cylindrical.

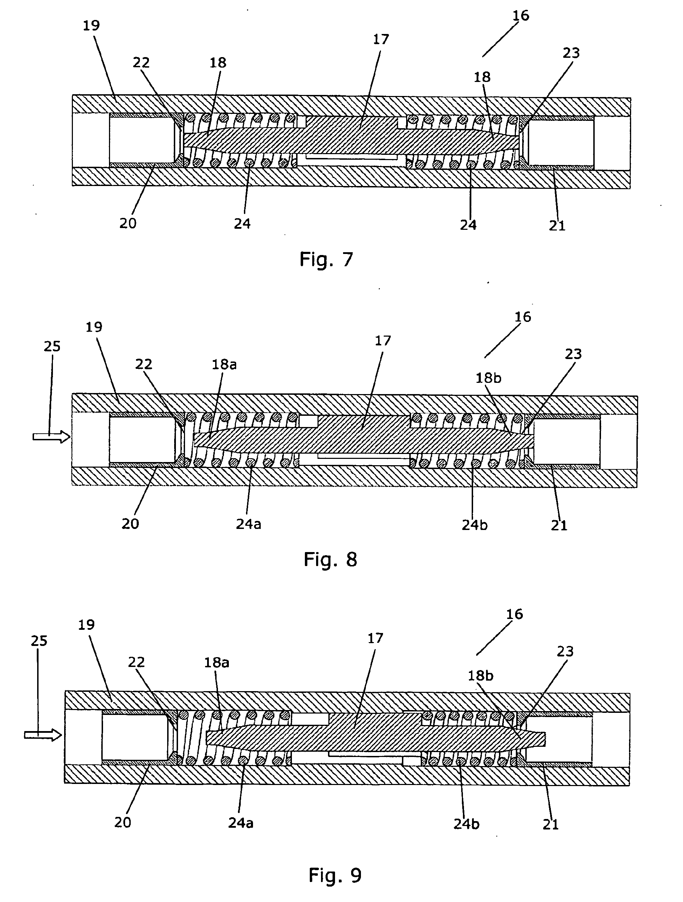

Fig. 6 is a cross sectional view of the first valve member 17 of Fig. 8 along the line H-H indicated in Fig. 5. The conical shapes of the end portions 18 are clearly visible.

Fig. 7 is a cross sectional view of an expansion valve 16 according to a first embodiment of the invention. The first valve member 17 of Figs. 5 and 6 is arranged movably inside a cylindrical tube 19. A second valve member 20 and a third valve member 21 are also arranged inside the cylindrical tube 19. The second valve member 20 and the third valve member 21 are not movable relative to the cylindrical tube 19.

The second valve member 20 defines a first fluid passage 22, and the third valve member 21 defines a second fluid passage 23. The end portions 18 of the first valve member 17 are arranged adjacent to the fluid passages 22, 23.

Two compressible springs 24 are arranged between the first valve member 17 and the second valve member 20, and between the first valve member 17 and the third valve member 21, respectively. The compressible springs 24 bias the first valve member 17 in a direction away from the second valve member 20 and in a direction away from the third valve member 21. In Fig. 7 the expansion valve 16 is shown in a rest position where there is no fluid flow through the expansion valve 16. Accordingly, the spring forces of the compressible springs 24 balance out, and the first valve member 17 is arranged at substantially equal distance to the second valve member 20 and the third valve member 21.

Fig. 8 is a cross sectional view of the expansion valve 16 of Fig. 7. In Fig. 8 a fluid flow has been introduced in the expansion valve 16 along a direction from the second valve member 20 towards the third valve member 21, as indicated by arrow 25. Thereby a differential pressure across the expansion valve 16 has been introduced, the pressure at the second valve member 20 being higher than the pressure at the third valve member 21. This has caused the first valve member 17 to be moved in a direction towards the third valve member 21, against the spring force of the compressible spring 24b arranged between the first valve member 17 and the third valve member 21. Thereby the cylindrical part of one of the end portions 18b has been moved into the fluid passage 23 of the third valve member 21, while the other end portion 18a has been moved further away from the second valve member 20. Thereby the cylindrical part of the end portion 18b blocks a part of the fluid passage 23 of the third valve member 21. Accordingly, the fluid flow through the fluid passage 23 is restricted, and the opening degree of the expansion valve 16 is defined by the fluid passage 23 and the end portion 18b in combination.

Small variations in the differential pressure across the expansion valve 16 will result in small movements of the first valve member 17. Thereby the end portion 18b will perform small movements inside the fluid passage 23. However, since the part of the end portion 18b which is arranged in the fluid passage 23 is the cylindrical part, such small movements do not result in changes in the opening degree of the expansion valve 16.

Fig. 9 is a cross sectional view of the expansion valve 16 of Figs. 7 and 8. In Fig. 9 the differential pressure across the expansion valve 16 has been increased as compared to the situation illustrated in Fig. 8. Thereby the first valve member 17 has been moved even further towards the third valve member 21, and the conical part of the end portion 18b is arranged in the fluid passage 23. Accordingly, a larger part of the fluid passage 23 is blocked by the end portion 18b, i.e. the opening degrblockee of the expansion valve 16 has been decreased.

Since the conical part of the end portion 18b is arranged in the fluid passage, variations in the differential pressure across the expansion valve 16, and thereby movements of the first valve member 17 relative to the third valve member 21, results in changes in the opening degree of the expansion valve 16. Accordingly, in the situation illustrated in Fig. 9, the opening degree of the expansion valve 16 is automatically altered in response to changes in the differential pressure across the expansion valve 16.

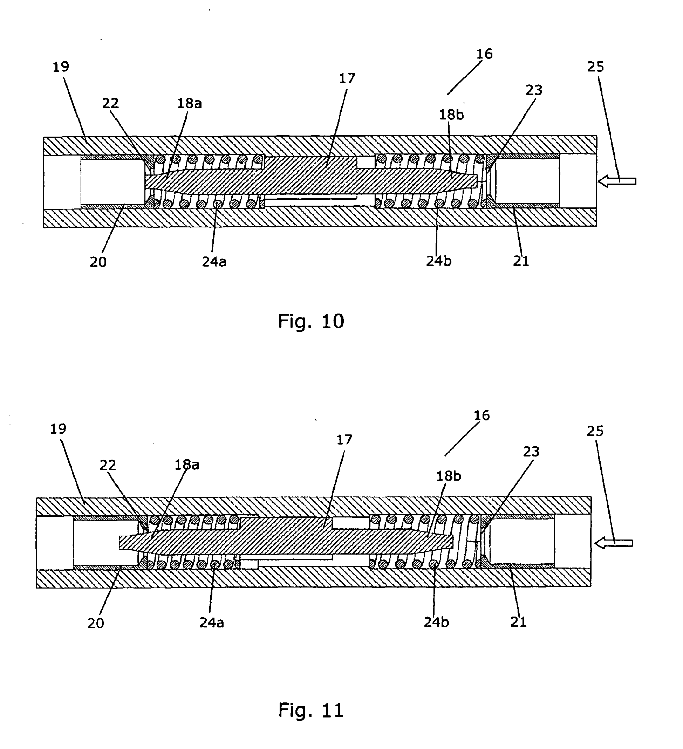

Fig. 10 is a cross sectional view of the expansion valve 16 of Figs. 7-9. In Fig. 10 the fluid flow through the expansion valve 16 has been reversed as compared to the situations illustrated on Figs. 8 and 9. Thus, in Fig. 10 refrigerant flows through the expansion valve 16 in a direction from the third valve member 21 towards the second valve member 20, as illustrated by arrow 25. Similarly to the situation illustrated in Fig. 8, a differential pressure is thereby introduced across the expansion valve 16. However, in this case the pressure at the third valve member 21 is higher than the pressure at the second valve member 20. This has caused the first valve member 17 to be moved in a direction towards the second valve member 20, against the spring force of the compressible spring 24a arranged between the first valve member 17 and the second valve member 20. Thereby the cylindrical part of the end portion 18a has been positioned in the fluid passage 22 of the second valve member 20, similarly to the situation illustrated in Fig. 8. Thus, the opening degree of the expansion valve 16 is, in this case, determined by the fluid passage 22 and the end portion 18a in combination.

Fig. 11 is a cross sectional view of the expansion valve 16 of Figs. 7-10. In Fig. 11 the differential pressure across the expansion valve 16 has been increased as compared to the situation illustrated in Fig. 10. Thereby the conical part of the end portion 18a has been moved into the fluid passage 22, similar to the situation illustrated in Fig. 9.

It is clear from Figs. 7-11 and from the description above, that a change in direction of the fluid flow through the expansion valve 16 automatically results in expansion valve 16 being switched between a state in which the opening degree of the expansion valve 16 is determined by the relative position of the first valve member 17 and the second valve member 20, and a state in which the opening degree of the expansion valve 16 is determined by the relative position of the first valve member 17 and the third valve member 21.

Fig. 12 is a side view of a first valve member 17 for an expansion valve according to a second embodiment of the invention. Each of the end portions 18 of the first valve member 17 is provided with a groove 26. This will be explained in further detail below.

Fig. 13 is a cross sectional view of the first valve member 17 of Fig. 12 along the line H-H indicated in Fig. 12. In Fig. 13 it can be seen that the grooves 26 are tapered along a longitudinal direction of the first valve member 17. Accordingly, the grooves 26 are deepest at a position near the tips of the first valve member 17.

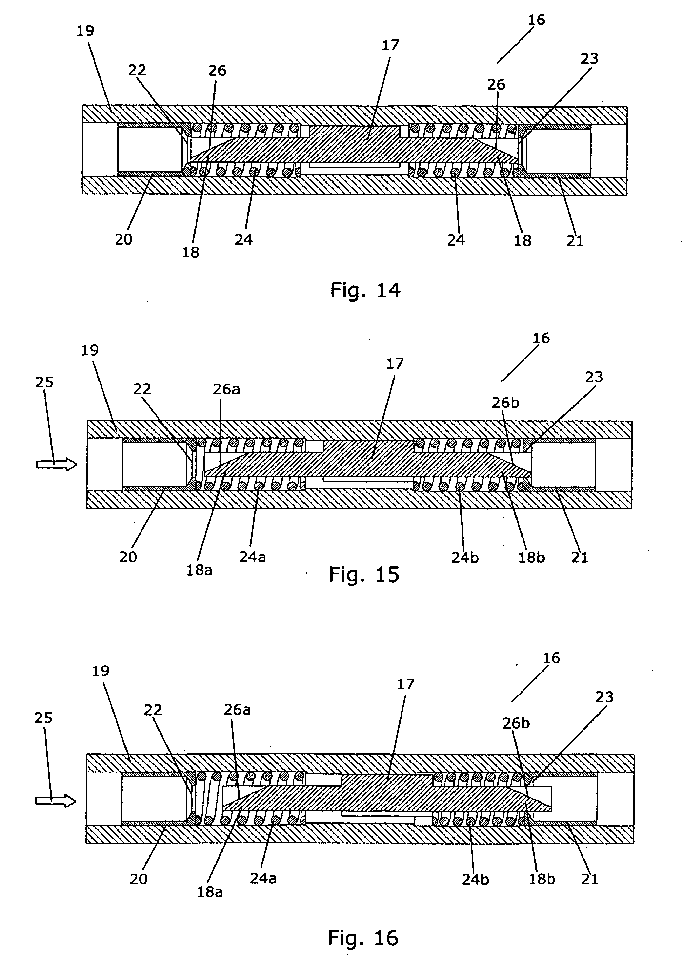

Fig. 14 is a cross sectional view of an expansion valve 16 according to a second embodiment of the invention. The expansion valve 16 of Fig. 14 is similar to the expansion valve 16 of Figs. 7-11, and it will therefore not be described in detail here. In the expansion valve 16 of Fig. 14, the first valve member 17 arranged inside the cylindrical tube 19 is of the kind shown in Figs. 12 and 13.

In Fig. 14 the expansion valve 16 is shown in a rest position where there is no fluid flow through the expansion valve 16, similarly to the situation illustrated in Fig. 7. Accordingly, the spring forces of the compressible springs 24 balance out, and the first valve member 17 is arranged at substantially equal distance to the second valve member 20 and the third valve member 21.

Fig. 15 is a cross sectional view of the expansion valve 16 of Fig. 14. In Fig. 15 a fluid flow has been introduced in the expansion valve 16 along a direction from the second valve member 20 towards the third valve member 21, as indicated by arrow 25, similarly to the situation illustrated in Fig. 8. Thus, similarly to what is described above, a differential pressure has been introduced across the expansion valve 16, moving the first valve member 17 in a direction towards the third valve member 21, against the spring force of compressible spring 24b. Thereby the end portion 18b has been introduced into the fluid passage 23 of the third valve member 21, and the fluid flow through the fluid passage 23 has been limited. The fluid flow through the fluid passage 23, and thereby the opening degree of the expansion valve 16, is defined by the dimensions of the groove 26b at the position of the fluid passage 23. As described above, variations in the differential pressure across the expansion valve 16 results in movements of the first valve member 17. Since the groove 26b is tapered along the direction of movements of the first valve member 17, such movements result in changes in the opening degree of the expansion valve 16.

Fig. 16 is a cross sectional view of the expansion valve 16 of Figs. 14 and 15. In Fig. 16 the differential pressure across the expansion valve 16 has been increased as compared to the situation illustrated in Fig. 15, thereby moving the end portion 18b further into the fluid passage 23. It is clear from Fig. 16 that the groove 26b is now positioned relative to the fluid passage 23 in such a manner that the opening degree of the expansion valve 16 is reduced as compared to the situation illustrated in Fig. 15.

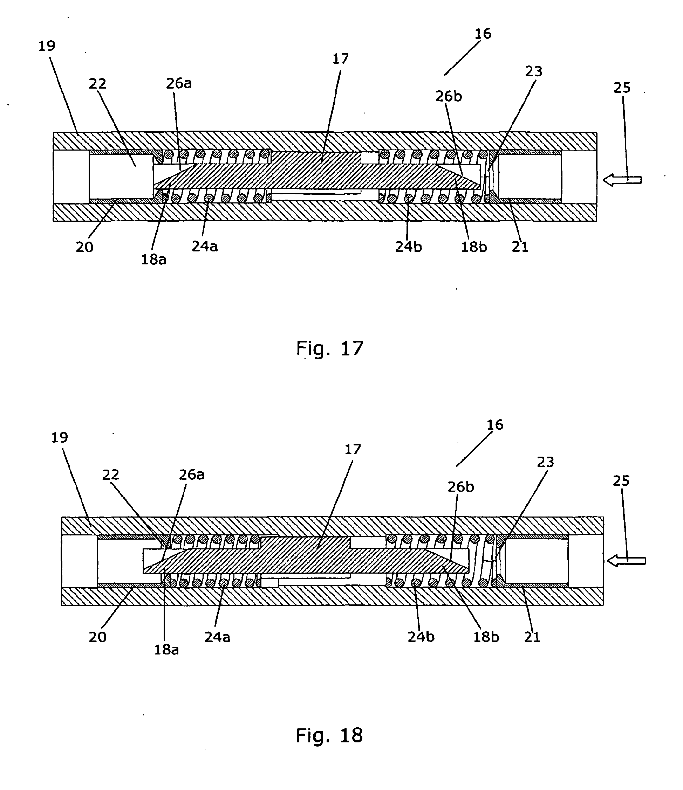

Fig. 17 is a cross sectional view of the expansion valve 16 of Figs. 14-16. In Fig. 17 the fluid flow through the expansion valve 16 has been reversed, so that fluid flows in a direction from the third valve member 21 towards the second valve member 20, as illustrated by arrow 25. As a consequence, the first valve member 17 has been moved towards the second valve member 20, against the spring force of the compressible spring 24a arranged between the first valve member 17 and the second valve member 20. This has caused a part of the end portion 18a to be introduced into the fluid passage 22 of the second valve member 20. Similarly to the situation described above with reference to Fig. 15, the fluid flow through the expansion valve 16 is thereby restricted, the fluid flow, and thereby the opening degree of the expansion valve 16, thereby being defined by the relative position of the groove 26a and the fluid passage 22.

Fig. 18 is a cross sectional view of the expansion valve 16 of Figs. 14-17. In Fig. 18, the differential pressure across the expansion valve 16 has been increased as compared to the situation illustrated in Fig. 17, thereby moving the end portion 18a further into the fluid passage 22 and further reducing the opening degree of the expansion valve 16.

It is clear from Figs. 14-18 and from the description above, that a change in direction of the fluid flow through the expansion valve 16 automatically results in expansion valve 16 being switched between a state in which the opening degree of the expansion valve 16 is determined by the relative position of the first valve member 17 and the second valve member 20, and a state in which the opening degree of the expansion valve 16 is determined by the relative position of the first valve member 17 and the third valve member 21.

It is an advantage that the opening degree of the expansion valve 16 is automatically altered in response to changes in the differential pressure across the expansion valve, due to the tapered grooves 26 provided at the end portions 18 of the first valve member 17, because such grooves can be provided with high accuracy. Accordingly, the opening degree of the expansion valve 16 can easily be controlled in an accurate manner.

## Claims

1. An expansion valve (16) for a vapour compression system (1), the expansion valve (16) comprising a first valve member (17), a second valve member (20) and a third valve member (21), said valve members (17, 20, 21) being arranged in such a manner that relative movements at least between the first valve member (17) and the second valve member (20), and between the first valve member (17) and the third valve member (21) are possible, the expansion valve (16) being switchable between a first state in which an opening degree of the expansion valve (16) is determined by the relative position of the first valve member (17) and the second valve member (20), and a second state in which an opening degree of the expansion valve (16) is determined by the relative position of the first valve member (17) and the third valve member (21), wherein the expansion valve (16) is automatically moved between the first state and the second state in response to a change in direction of fluid flow through the expansion valve (16), **characterised in that** the second valve member (20) defines a first fluid passage (22), and the third valve member (21) defines a second fluid passage (23), wherein end portions (18, 18a, 18b) of the first valve member (17) are arranged adjacent to the fluid passages (22, 23) and are intended for being moved into the first fluid passage (22) and the second fluid passage (23) so that an opening degree of the expansion valve (16) is defined by the fluid passages (22,23) and the end portions (18,18a,18b) in combination, wherein two compressible springs (24) are arranged between the first valve member (17) and the second valve member (20), and between the first valve member (17) and the third valve member (21), respectively, and wherein the two compressible springs (24) bias the first valve member (17) in a direction away from the second valve member (20) and in a direction away from the third valve member (21), and wherein the first valve member (17), in a rest position, where there is no fluid flow through the expansion valve (16), is arranged at substantially equal distance to the second valve member (20) and the third valve member 21, and wherein an increase in differential pressure across the expansion valve (16) results in the first valve member (17), in the first state, being moved towards the second valve member (20) or, in the second state, being moved towards the third valve member (21), the increase in differential pressure resulting in a larger part of the fluid passages (22,23) being blocked by the end portions (18,18a,18b), and in the opening degree of the expansion valve (16) thereby being decreased.

2. An expansion valve (16) according to claim 1, wherein the expansion valve (16) has a first, substantially fixed opening degree when the expansion valve (16) is in the first state, and a second, substantially fixed opening degree when the expansion valve (16) is in the second state, the second opening degree being distinct from the first opening degree.

3. An expansion valve (16) according to claim 1, wherein one or more valve parts is/are automatically moved in response to changes in a differential pressure across the expansion valve (16), the opening degree of the expansion valve (16) thereby being automatically altered in response to changes in the differential pressure across the expansion valve (16).

4. An expansion valve (16) according to claim 3, wherein the opening degree of the expansion valve (16) decreases in response to an increase in the differential pressure across the expansion valve (16), and the opening degree of the expansion valve (16) increases in response to a decrease in the differential pressure across the expansion valve (16).

5. An expansion valve (16) according to any of the preceding claims, wherein the first valve member (17) and the second valve member (20) in combination form a first expansion valve, and wherein the first valve member (17) and the third valve member (21) in combination form a second expansion valve.

6. An expansion valve (16) according to any of the preceding claims, further comprising biasing means (24) arranged to mechanically bias the first valve member (17) and the second valve member (20) in a direction away from each other, and/or to mechanically bias the first valve member (17) and the third valve member (21) in a direction away from each other.

7. An expansion valve (16) according to any of the preceding claims, wherein the second valve member (20) and the third valve member (21) each defines a fluid passage (22, 23), and wherein the first valve member (17) comprises a first protruding element (18a) being arranged in the fluid passage (22) of the second valve member (20) when the expansion valve (16) is in the first state, and a second protruding element (18b) being arranged in the fluid passage (23) of the third valve member (21) when the expansion valve (16) is in the second state.

8. An expansion valve (16) according to claim 7, wherein the first protruding element (18a) and/or the second protruding element (18b) has/have a geometry which provides an opening degree of the expansion valve (16) which is a known function of the relative position of the first valve member 817) and the second (20) and/or third valve (21) member.

9. An expansion valve (16) according to claim 7 or 8, wherein the first protruding element (18a) and/or the second protruding element (18b) has/have a substantially conical shape.

10. An expansion valve (16) according to any of claims 7-9, wherein the first protruding element (18a) and/or the second protruding element (18b) is/are provided with one or more grooves (26), at least one groove (26) defining a dimension which varies along a longitudinal direction of the protruding element (18).

11. An expansion valve (16) according to any of claims 7-10, wherein the second protruding element (18b) is arranged outside the fluid passage (23) of the third valve member (21) when the expansion valve (16) is in the first state and/or the first protruding element (18a) is arranged outside the fluid passage (22) of the second valve member (20) when the expansion valve (16) is in the second state.

12. A vapour compression system (1) comprising a compressor (2), a first heat exchanger (3), a second heat exchanger (4) and an expansion valve (16) according to any of the preceding claims, the compressor (2) the first heat exchanger (3), the expansion valve (16) and the second heat exchanger (4) being arranged along a refrigerant path.

13. A vapour compression system (1) according to claim 12, wherein the first heat exchanger (3) operates as an evaporator and the second heat exchanger (4) as a condenser when the expansion valve (16) is in the first state, and wherein the first heat exchanger (3) operates as a condenser and the second heat exchanger (4) as an evaporator when the expansion valve (16) is in the second state.

14. A vapour compression system (1) according to claim 12 or 13, wherein the expansion valve (16) is arranged to supply expanded refrigerant to the first heat exchanger (3) when the expansion valve (16) is in the first state, and to supply expanded refrigerant to the second heat exchanger (4) when the expansion valve (16) is in the second state.

15. A vapour compression system (1) according to any of claims 12-14, wherein at least the first heat exchanger (3), the second heat exchanger (4) and the expansion valve (16) are arranged in a compact unit.

## Patentansprüche

1. Expansionsventil (16) für ein Dampfkompressionssystem (1), wobei das Expansionsventil (16) ein erstes Ventilelement (17), ein zweites Ventil-element (20) und ein drittes Ventilelement (21) umfasst, wobei die Ventilelemente (17, 20, 21) in einer solchen Weise angeordnet sind, dass relative Bewegungen mindestens zwischen dem ersten Ventilelement (17) und dem zweiten Ventilelement (20) sowie zwischen dem ersten Ventilelement (17) und dem dritten Ventilelement (21) möglich sind, wobei das Expansionsventil (16) zwischen einem ersten Zustand, in dem ein Öffnungsgrad des Expansionsventils (16) durch die relative Position des ersten Ventilelements (17) und des zweiten Ventilelements (20) bestimmt wird, und einem zweiten Zustand, in dem ein Öffnungsgrad des Expansionsventils (16) durch die relative Position des ersten Ventilelements (17) und des dritten Ventilelements (21) bestimmt wird, umschaltbar ist, wobei das Expansionsventil (16) zwischen dem ersten Zustand und dem zweiten Zustand in Reaktion auf eine Änderung der Flüssigkeitsflussrichtung durch das Expansionsventil (16) automatisch bewegt wird, **dadurch gekennzeichnet, dass** das zweite Ventilelement (20) einen ersten Flüssigkeitsdurchgang (22) und das dritte Ventilelement (21) einen zweiten Flüssigkeitsdurchgang (23) definieren, wobei Endabschnitte (18, 18a, 18b) des ersten Ventilelements (17) angrenzend an die Flüssigkeitsdurchgänge (22, 23) angeordnet sind und in den ersten Flüssigkeitsdurchgang (22) und den zweiten Flüssigkeitsdurchgang (23) hinein bewegt werden, so dass ein Öffnungsgrad des Expansionsventils (16) durch die Flüssigkeitsdurchgänge (22, 23) und die Endabschnitte (18, 18a, 18b) in Kombination definiert wird, wobei zwei komprimierbare Federn (24) zwischen dem ersten Ventilelement (17) und dem zweiten Ventilelement (20) bzw. zwischen dem ersten Ventilelement (17) und dem dritten Ventilelement (21) angeordnet sind, und wobei die zwei komprimierbaren Federn (24) das erste Ventilelement (17) in einer Richtung weg vom zweiten Ventilelement (20) sowie in einer Richtung weg vom dritten Ventilelement (21) vorspannen, und wobei das erste Ventilelement (17) in einer Ruheposition, in der kein Flüssigkeitsfluss durch das Expansionsventil (16) erfolgt, in im Wesentlichen gleicher Distanz zum zweiten Ventilelement (20) und zum dritten Ventil-element (21) angeordnet ist, und wobei eine Erhöhung des Differenzdrucks über dem Expansionsventil (16) zur Folge hat, dass das erste Ventilelement (17) im ersten Zustand hin zum zweiten Ventilelement (20) oder im zweiten Zustand hin zum dritten Ventilelement (21) bewegt wird, wobei die Erhöhung des Differenzdrucks dazu führt, dass ein größerer Teil der Flüssigkeitsdurchgänge (22, 23) durch die Endabschnitte (18, 18a, 18b) blockiert und dadurch der Öffnungsgrad des Expansionsventils (16) verringert wird.

2. Expansionsventil (16) nach Anspruch 1, wobei das Expansionsventil (16) einen ersten, im Wesentlichen fixierten Öffnungsgrad hat, wenn sich das Expansionsventil (16) im ersten Zustand befindet, sowie einen zweiten, im Wesentlichen fixierten Öffnungsgrad hat, wenn sich das Expansionsventil (16) im zweiten Zustand befindet, wobei sich der zweite Öffnungsgrad vom ersten Öffnungsgrad unterscheidet.

3. Expansionsventil (16) nach Anspruch 1, bei dem ein oder mehrere Ventilteile in Reaktion auf Änderungen eines Differenzdrucks über dem Expansionsventil (16) automatisch bewegt wird/werden, wobei der Öffnungsgrad des Expansionsventils (16) dadurch in Reaktion auf Änderungen des Differenzdrucks über dem Expansionsventil (16) automatisch verändert wird.

4. Expansionsventil (16) nach Anspruch 3, bei dem der Öffnungsgrad des Expansionsventils (16) in Reaktion auf eine Zunahme des Differenzdrucks über dem Expansionsventil (16) abnimmt und der Öffnungsgrad des Expansionsventils (16) in Reaktion auf eine Abnahme des Differenzdrucks über dem Expansionsventil (16) zunimmt.

5. Expansionsventil (16) nach einem der vorstehend aufgeführten Ansprüche, bei dem das erste Ventilelement (17) und das zweite Ventilelement (20) in Kombination ein erstes Expansionsventil bilden, und wobei das erste Ventilelement (17) und das dritte Ventilelement (21) in Kombination ein zweites Expansionsventil bilden.

6. Expansionsventil (16) nach einem der vorstehend aufgeführten Ansprüche, das weiterhin ein Vorspannmittel (24) umfasst, das angeordnet ist, um das erste Ventilelement (17) und das zweite Ventilelement (20) in einer voneinander weg verlaufenden Richtung mechanisch vorzuspannen und/oder das erste Ventilelement (17) und das dritte Ventilelement (21) in einer voneinander weg verlaufenden Richtung mechanisch vorzuspannen.

7. Expansionsventil (16) nach einem der vorstehend aufgeführten Ansprüche, bei dem das zweite Ventilelement (20) und das dritte Ventilelement (21) jeweils einen Flüssigkeitsdurchgang (22, 23) definieren, und wobei das erste Ventilelement (17) ein erstes vorspringendes Element (18a), das im Flüssigkeitsdurchgang (22) des zweiten Ventilelements (20) angeordnet ist, wenn sich das Expansionsventil (16) im ersten Zustand befindet, sowie ein zweites vorspringendes Element (18b) umfasst, das im Flüssigkeitsdurchgang (23) des dritten Ventilelements (21) angeordnet ist, wenn sich das Expansionsventil (16) im zweiten Zustand befindet.

8. Expansionsventil (16) nach Anspruch 7, bei dem das erste vorspringende Element (18a) und/oder das zweite vorspringende Element (18b) eine Geometrie hat/haben, die einen Öffnungsgrad des Expansionsventils (16) bereitstellt, der eine bekannte Funktion der relativen Position des ersten Ventilelements (17) sowie des zweiten (20) und/oder des dritten Ventilelements (21) ist.

9. Expansionsventil (16) nach Anspruch 7 oder 8, bei dem das erste vorspringende Element (18a) und/oder das zweite vorspringende Element (18b) eine im Wesentlichen konische Form hat/haben.

10. Expansionsventil (16) nach einem der Ansprüche 7 bis 9, bei dem das erste vorspringende Element (18a) und/oder das zweite vorspringende Element (18b) mit einer oder mehreren Nuten (26) vorgesehen ist/sind, wobei mindestens eine Nut (26) ein Maß definiert, das entlang einer Längsrichtung des vorspringenden Elements (18) variiert.

11. Expansionsventil (16) nach einem der Ansprüche 7 bis 10, bei dem das zweite vorspringende Element (18b) außerhalb des Flüssigkeitsdurchgangs (23) des dritten Ventilelements (21) angeordnet ist, wenn sich das Expansionsventil (16) im ersten Zustand befindet, und/oder das erste vorspringende Element (18a) außerhalb des Flüssigkeitsdurchgangs (22) des zweiten Ventilelements (20) angeordnet ist, wenn sich das Expansionsventil (16) im zweiten Zustand befindet.

12. Dampfkompressionssystem (1), das einen Kompressor (2), einen ersten Wärmetauscher (3), einen zweiten Wärmetauscher (4) und ein Expansionsventil (16) nach einem der vorstehend aufgeführten Ansprüche umfasst, wobei der Kompressor (2), der erste Wärmetauscher (3), das Expansionsventil (16) und der zweite Wärmetauscher (4) entlang einem Kältemittelpfad angeordnet sind.

13. Dampfkompressionssystem (1) nach Anspruch 12, bei dem der erste Wärmetauscher (3) als ein Verdampfer und der zweite Wärmetauscher (4) als ein Kondensator arbeitet, wenn sich das Expansionsventil (16) im ersten Zustand befindet, und bei dem der erste Wärmetauscher (3) als ein Kondensator und der zweite Wärmetauscher (4) als ein Verdampfer arbeitet, wenn sich das Expansionsventil (16) im zweiten Zustand befindet.

14. Dampfkompressionssystem (1) nach Anspruch 12 oder 13, bei dem das Expansionsventil (16) angeordnet ist, um dem ersten Wärmetauscher (3) entspanntes Kältemittel zuzuführen, wenn sich das Expansionsventil (16) im ersten Zustand befindet, sowie dem zweiten Wärmetauscher (4) entspanntes Kältemittel zuzuführen, wenn sich das Expansionsventil (16) im zweiten Zustand befindet.

15. Dampfkompressionssystem (1) nach einem der Ansprüche 12 bis 14, bei dem mindestens der erste Wärmetauscher (3), der zweite Wärmetauscher (4) und das Expansionsventil (16) in einer kompakten Einheit angeordnet sind.

## Revendications

1. Détendeur (16) pour un système de compression de vapeur (1), le détendeur (16) comprenant un premier organe de soupape (17), un deuxième organe de soupape (20), et un troisième organe de soupape (21), lesdits organes de soupape (17, 20, 21) étant disposés de manière à ce que des mouvements relatifs au moins entre le premier organe de soupape (17) et le deuxième organe de soupape (20), et entre le premier organe de soupape (17) et le troisième organe de soupape (21) soient possibles, le détendeur (16) pouvant être commuté entre un premier état dans lequel un degré d'ouverture du détendeur (16) est déterminé par la position relative du premier organe de soupape (17) et du deuxième organe de soupape (20), et un deuxième état dans lequel un degré d'ouverture du détendeur (16) est déterminé par la position relative du premier organe de soupape (17) et du troisième organe de soupape (21), le détendeur (16) étant automatiquement déplacé entre le premier état et le deuxième état en réponse à un changement de direction de l'écoulement de fluide à travers le détendeur (16), **caractérisé en ce que** le deuxième organe de soupape (20) définit un premier passage de fluide (22), et le troisième organe de soupape (21) définit un deuxième passage de fluide (23), des portions d'extrémité (18, 18a, 18b) du premier organe de soupape (17) étant disposées en position adjacente aux passages de fluide (22, 23) et étant destinées à être déplacées dans le premier passage de fluide (22) et le deuxième passage de fluide (23) de telle sorte qu'un degré d'ouverture du détendeur (16) soit défini par les passages de fluide (22, 23) et les portions d'extrémité (18, 18a, 18b) en combinaison, deux ressorts compressibles (24) étant disposés entre le premier organe de soupape (17) et le deuxième organe de soupape (20), et entre le premier organe de soupape (17) et le troisième organe de soupape (21), respectivement, et les deux ressorts compressibles (24) sollicitant le premier organe de soupape (17) dans une direction à l'écart du deuxième organe de soupape (20) et dans une direction à l'écart du troisième organe de soupape (21), et le premier organe de soupape (17), dans une position de repos, dans laquelle aucun écoulement de fluide ne se produit à travers le détendeur (16), étant disposé substantiellement à égale distance du deuxième organe de soupape (20) et du troisième organe de soupape (21), et une augmentation de la différence de pression en travers du détendeur (16) entraînant, dans le premier état, le déplacement du premier organe de soupape (17) vers le deuxième organe de soupape (20), ou, dans le deuxième état, son déplacement vers le troisième organe de soupape (21), l'augmentation de la différence de pression résultant en le blocage d'une plus grande partie des passages de fluide (22, 23) par les portions d'extrémité (18, 18a, 18b), et en la diminution conséquente du degré d'ouverture du détendeur (16).

2. Détendeur (16) selon la revendication 1, dans lequel le détendeur (16) présente un premier degré d'ouverture substantiellement fixe lorsque le détendeur (16) est dans le premier état, et un deuxième degré d'ouverture substantiellement fixe lorsque le détendeur (16) est dans le deuxième état, le deuxième degré d'ouverture étant différent du premier degré d'ouverture.

3. Détendeur (16) selon la revendication 1, dans lequel une ou plusieurs parties de soupape est/sont automatiquement déplacée(s) en réponse à des changements de différence de pression en travers du détendeur (16), le degré d'ouverture du détendeur (16) étant ainsi automatiquement modifié en réponse à des changements de différence de pression en travers du détendeur (16).

4. Détendeur (16) selon la revendication 3, dans lequel le degré d'ouverture du détendeur (16) diminue en réponse à une augmentation de la différence de pression en travers du détendeur (16), et le degré d'ouverture du détendeur (16) augmente en réponse à une diminution de la différence de pression en travers du détendeur (16).

5. Détendeur (16) selon l'une quelconque des revendications précédentes, dans lequel le premier organe de soupape (17) et le deuxième organe de soupape (20) en combinaison forment un premier détendeur, et dans lequel le premier organe de soupape (17) et le troisième organe de soupape (21) en combinaison forment un deuxième détendeur.

6. Détendeur (16) selon l'une quelconque des revendications précédentes, comprenant en outre un moyen de sollicitation (24) prévu pour solliciter mécaniquement le premier organe de soupape (17) et le deuxième organe de soupape (20) dans une direction à l'écart l'un de l'autre et/ou pour solliciter mécaniquement le premier organe de soupape (17) et le troisième organe de soupape (21) dans une direction à l'écart l'un de l'autre.

7. Détendeur (16) selon l'une quelconque des revendications précédentes, dans lequel le deuxième organe de soupape (20) et le troisième organe de soupape (21) définissent chacun un passage de fluide (22, 23), et dans lequel le premier organe de soupape (17) comprend un premier élément saillant (18a) disposé dans le passage de fluide (22) du deuxième organe de soupape (20) lorsque le détendeur (16) est dans le premier état, et un deuxième élément saillant (18b) disposé dans le passage de fluide (23) du troisième organe de soupape (21) lorsque le détendeur (16) est dans le deuxième état.

8. Détendeur (16) selon la revendication 7, dans lequel le premier élément saillant (18a) et/ou le deuxième élément saillant (18b) a/ont une géométrie qui fournit un degré d'ouverture du détendeur (16) qui est une fonction connue de la position relative du premier organe de soupape (17) et du deuxième organe de soupape (20) et/ou du troisième organe de soupape (21).

9. Détendeur (16) selon la revendication 7 ou 8, dans lequel le premier élément saillant (18a) et/ou le deuxième élément saillant (18b) a/ont une forme substantiellement conique.

10. Détendeur (16) selon l'une quelconque des revendications 7 à 9, dans lequel le premier élément saillant (18a) et/ou le deuxième élément saillant (18b) est/sont pourvu(s) d'une ou de plusieurs gorges (26), au moins une gorge (26) définissant une dimension qui varie le long d'une direction longitudinale de l'élément saillant (18).

11. Détendeur (16) selon l'une quelconque des revendications 7 à 10, dans lequel le deuxième élément saillant (18b) est disposé à l'extérieur du passage de fluide (23) du troisième organe de soupape (21) lorsque le détendeur (16) est dans le premier état et/ou le premier élément saillant (18a) est disposé à l'extérieur du passage de fluide (22) du deuxième organe de soupape (20) lorsque le détendeur (16) est dans le deuxième état.

12. Système de compression de vapeur (1) comprenant un compresseur (2), un premier échangeur de chaleur (3), un deuxième échangeur de chaleur (4) et un détendeur (16) selon l'une quelconque des revendications précédentes, le compresseur (2), le premier échangeur de chaleur (3), le détendeur (16) et le deuxième échangeur de chaleur (4) étant disposés le long d'une trajectoire de réfrigérant.

13. Système de compression de vapeur (1) selon la revendication 12, dans lequel le premier échangeur de chaleur (3) fonctionne sous forme d'évaporateur et le deuxième échangeur de chaleur (4) fonctionne sous forme de condenseur lorsque le détendeur (16) est dans le premier état, et dans lequel le premier échangeur de chaleur (3) fonctionne sous forme de condenseur et le deuxième échangeur de chaleur (4) fonctionne sous forme d'évaporateur lorsque le détendeur (16) est dans le deuxième état.

14. Système de compression de vapeur (1) selon la revendication 12 ou 13, dans lequel le détendeur (16) est disposé de manière à fournir du réfrigérant détendu au premier échangeur de chaleur (3) lorsque le détendeur (16) est dans le premier état, et de manière à fournir du réfrigérant détendu au deuxième échangeur de chaleur (4) lorsque le détendeur (16) est dans le deuxième état.

15. Système de compression de vapeur (1) selon l'une quelconque des revendications 12 à 14, dans lequel au moins le premier échangeur de chaleur (3), le deuxième échangeur de chaleur (4) et le détendeur (16) sont disposés dans une unité compacte.
